(19) Europäisches Patentamt

European Patent Office

Office européen des brevets

(11) **EP 1 617 254 A1**

(12) **EUROPÄISCHE PATENTANMELDUNG**

(43) Veröffentlichungstag:
   **18.01.2006 Patentblatt 2006/03**

(51) Int Cl.:
   *G02B 21/00* *(2006.01)*

(21) Anmeldenummer: **04023498.1**

(22) Anmeldetag: **01.10.2004**

(84) Benannte Vertragsstaaten:
   **AT BE BG CH CY CZ DE DK EE ES FI FR GB GR HU IE IT LI LU MC NL PL PT RO SE SI SK TR**
   Benannte Erstreckungsstaaten:
   **AL HR LT LV MK**

(30) Priorität: **16.07.2004 DE 102004034951**

(71) Anmelder: **CARL ZEISS JENA GmbH**
   **07745 Jena (DE)**

(72) Erfinder:
   • **Wolleschensky, Ralf**
     **99510 Apolda (DE)**
   • **Hecht, Frank**
     **99425 Weimar (DE)**
   • **Engelmann, Ralf**
     **07745 Jena (DE)**

(54) **Verfahren zur bildlichen Erfassung von Objekten mittels eines Lichtrastermikroskopes mit linienförmiger Abtastung**

(57)   Verfahren zur bildlichen Erfassung von Objekten mittels eines Lichtrastermikroskopes mit linienförmiger Abtastung, wobei eine Abtastung einer Probe zur Erzeugung eines Probenbildes in Abtastschritten erfolgt und der Abstand zwischen mindestens zwei Abtastschritten variabel einstellbar ist und mindestens eine zweite Abtastung der Probe erfolgt, bei dem die Lage der Abtastschritte zur Abtastrichtung versetzt wird, wobei vorzugsweise eine zeilenweise Abtastung der Probe erfolgt.

Abb.10

**Beschreibung**

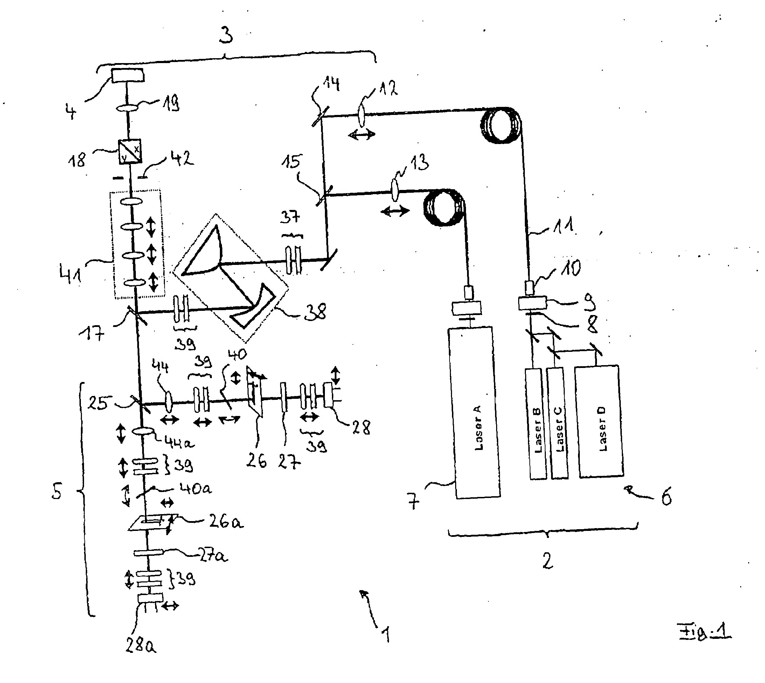

Die Erfindung wird nachfolgend unter Bezugnahme auf die Zeichnungen näher erläutert. Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Zur allgemeinen Beschreibung eines punktweise abtastenden Laser Scanning Mikroskopes wird auf DE 19702753A1 verwiesen, die somit Bestandteil der hier vorliegenden Beschreibung ist.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder —bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

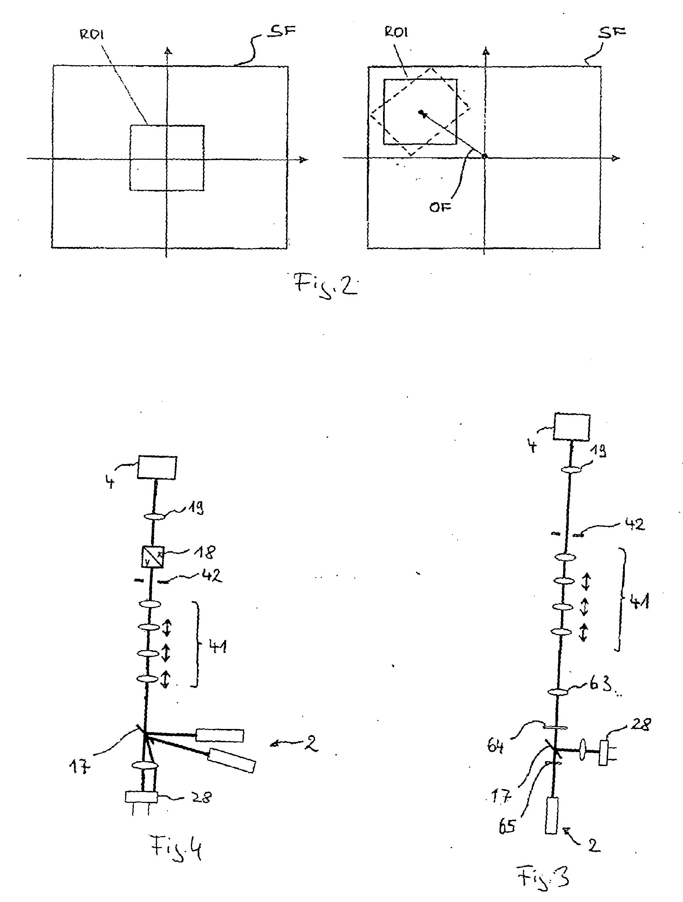

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 3 und 4 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freiheitsgrade der Zoom-Optik 41 entsprechen genau der Zahl der Freiheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 2 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF.

Resonanzscanner sind beispielsweise in Pawley, Handbook of Biological Confocal Microscopy , Plenum Press 1994, Seite 461ff beschrieben.

Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 3 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 3 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 1 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 2 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 4, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 2 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

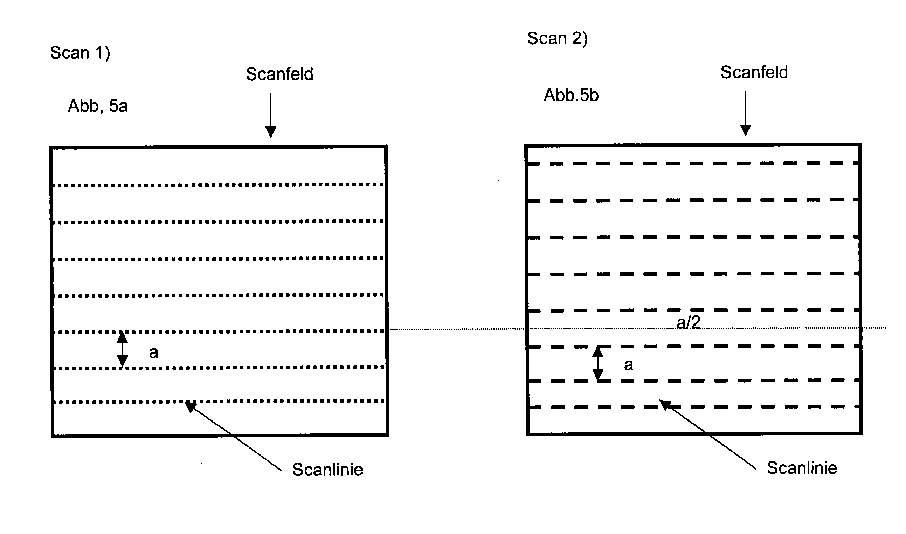

Abb.5 a zeigt ein Scanfeld eines Linienscanners mit Scanlinien SL, die zueinander einen Versatz a aufweisen. Sinngemäß sind diese Scanlinien auch durch zeilenweise punktförmige Abtastung mit einem Punktscanner erzeugbar. Der Versatz a ist hier größer als der Abstand zwischen den abgescannten Linien bei einer Scanrate die zu einer maximal möglichen optischen Auflösung der Mikroskopanordnung führen würde . Dadurch kann aber ein Objektfeld schneller abgescannt werden, da die Verweildauer pro aufgenommener Zeile zur Bildaufnahme die Geschwindigkeit der Gesamtaufnahme bestimmt.

In Abb. 5b sind die Scanlinien um einen Betrag a/2 oder auch a/N, N=2, 3 ... vertikal verschoben, die Bildaufnahme der Einzellinien erfolgt weiter im Abstand a , jedoch in den Zwischenräumen der abgescannten Linien des Scanvorganges nach Fig.1a.

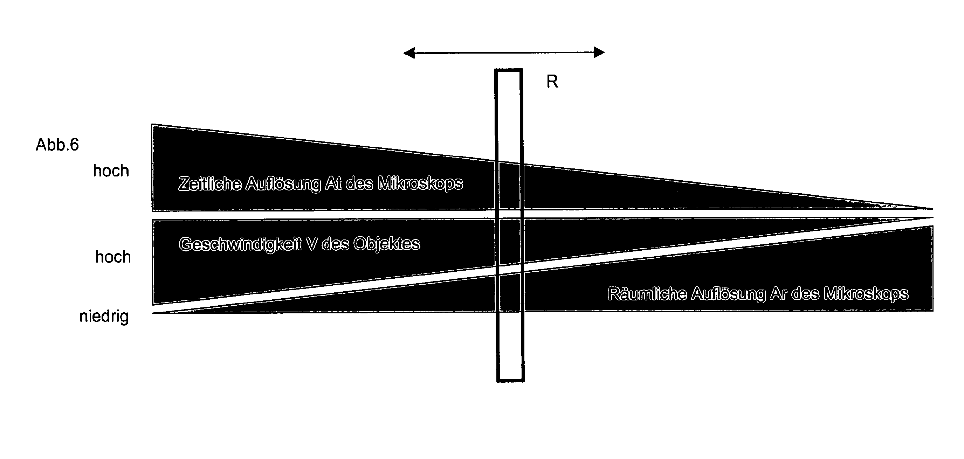

Abbildung 6 zeigt schematisch einen Schieberegler zur Einstellung des Verhältnisses der räumlichen und zeitlichen Auflösung des Mikroskopes bei eingebbarer Geschwindigkeit des zu untersuchenden Objektes.

Die Scanlinien werden bei gleicher Scangeschwindigkeit um einen Abstand verschoben ( Versatz eines Scanners ( offset) wird geändert), aber hier nicht wegen des Bleichens sondern um einen Kompromiß bei der Aufnahme schneller Prozesse oder Bewegungen mit hoher Zeitauflösung und gleichzeitigem Vorhandensein von quasistatischen oder langsam beweglichen Regionen oder Gebilden in der Probe ( kaum Bewegung), wo zur Abbildung eine geringe zeitliche Auflösung erforderlich ist. Beispielsweise wird das Scanfeld von z.B. 12mm mit 1024 möglichen Zeilen bei Ausschöpfung der optischen Auflösung in 4 mal 256 Zeilen aufgeteilt und viermal jeweils um eine Zeile versetzt abgetastet.

Die Abtastung der 256 Zeilen erfolgt dadurch sehr schnell. Beträgt die Integrationszeit für eine Zeile ca. 20 Mikrosekunden, so erfolgt die Aufnahme eines Bildes innerhalb von 256 x 20 Mikrosekunden , d.h. in ca. 5 Millisekunden.

Beim nächsten Scan (phasenverschoben, nächste 256 Zeilen ) wird für unbewegte Objekte die Auflösung doppelt so hoch sein, während schnell bewegte Objekte in ihrer Bewegung unscharf erkennbar sind. Es werden soviel Scan -Unterschritte durchgeführt bis die Grenze der optischen Auflösung erreicht wird. Diese Grenze liegt ist nach dem Nyquist Kriterium dann erreicht, wenn die Samplingschrittweite gleich der halben optischen Auflösung des Mikroskops entspricht. Müssen beispielsweise zur Erreichung des Nyquist Kriteriums 2048 Zeilen gerastert werden, dann beträgt die Zeitauflösung mit der räumlich hochaufgelöste Strukturen untersucht werden können 2048 x 20 Mikrosekunden, d.h. 40 Millisekunden.

Objekte die sich schnell bewegen werden erst einmal (wegen der geringeren räumlichen Sampling Auflösung) unscharf dargestellt, wen sie im Verlauf an einer Stelle verharren werden sie schärfer durch die wiederholte und versetzte Abtastung. Durch die Aufnahmen mit geringerer Auflösung und höherer Geschwindigkeit ( als eine Art Übersichtsscan) aufgezeichnet, werden vorteilhaft schnelle Bewegungen sichtbar die bei Aufnahme ausschließlich mit höchster Auflösung nicht sichtbar wären (wegen der Zeitdauer der Bildaufnahme).

Durch den Anwender wird durch geeignete Eingabemittel, beispielsweise Schieberegler ( Fig.6) das Verhältnis zwischen der zeitlichen Auflösung At ( framerate), der zu erfassenden Geschwindigkeit V ( wie vom Anwender erwartet) , mit der sich Objekte durch das Scanfeld bewegen und der räumlichen Auflösung Ar eingestellt. Dies stellt immer einen Kompromiß dar, der vom Anwender anhand seiner Erwartungen optimierbar ist.

Beispielsweise können 100Mikrometer große Objekte vorhanden sein, die sich schnell bewegen .

Eine Auflösung von 1 Mikrometer ist hier nicht vonnöten, beispielsweise könnte der Benutzer eine Auflösung von 10 Mikrometer einstellen und die Erhöhung der Aufnahmegeschwindigkeit für die bessere Erfassung von Objektbewegungen nutzen.

Objekte, die statisch im Vgl. zur Bildrate des Mikroskops sind, werden mit optischer Auflösung am Beugungslimit wiedergegeben

Dynamische Objekte, die sich schneller als die Bildrate bewegen, werden mit räumlicher Auflösung der Samplingrate wiedergegeben, die im allgemeinen geringer als optische Auflösung ist.

Bei Aufnahme einer Zeitserie erscheinen dynamische Objekte erst unscharf und sobald sie zu statischen Objekten werden, werden sie mit der Aufösung am Beugungslimit wiedergegeben.

Schnelle dynamische Objekte können durch Korrelation der Einzelbilder zueinander sichtbar gemacht werden. Dies geschieht,

Indem korrelierte Punkte (der aufeinander folgend aufgenommenen Bilder) eine Bildfarbe erhalten und die restlichen Punkte im Bild eine weitere Bildfarbe

Eine farbkodierte Überlagerung der schnell und langsam bewegenden Objekte kann erfolgen, wobei die statische Bildinformation durch eine Korrelation der Bilder abesepariert werden kann. Die zu verschiedenen Zeitpunkte korrelierenden Bildpunkte werden hierzu verwendet.

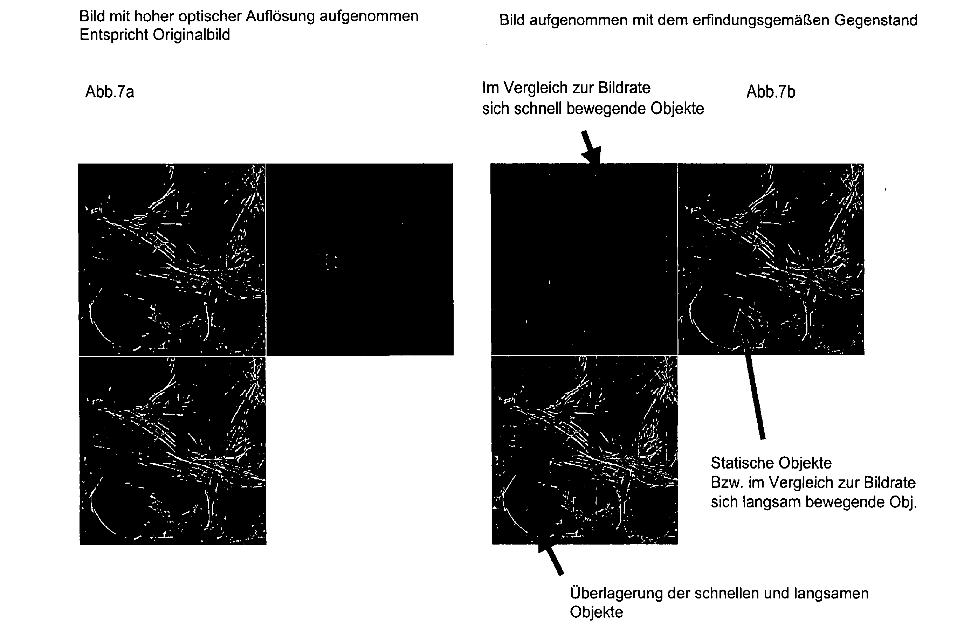

In Fig.7a ist ein Monitorbild mit hoher optischer Auflösung dargestellt.

Rechts sind in einem vergrößerten Abschnitt des linken Bildteils schnell bewegliche Objekte, beispielsweise dargestellt, die aufgrund der hohen optischen Auflösung nur an einer Stelle sichtbar sind.

In Fig. 7b ist die optische Auflösung erfindungsgemäß verringert worden ( geringere Bildrate) .

Hierdurch erscheinen die schnellen Objekte ( übertrieben dargestellt ) unscharf, die statischen Objekte jedoch weiterhin scharf. Die Bewegung der unscharfen Objekte kann beobachtet oder aufgezeichnet werden.

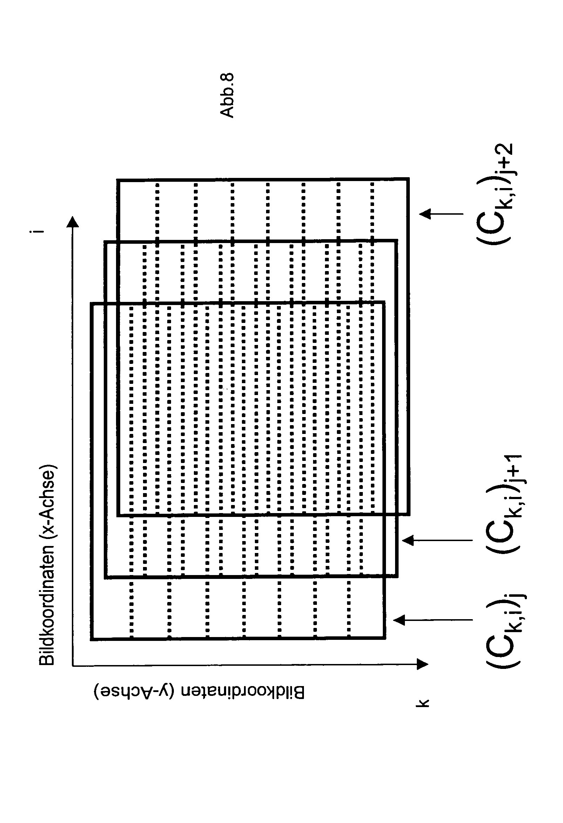

Anhand von Fig.8 wird die Erstellung der Bilder mit reduzierter Bildrate erläutert.

Zeilendetektor liegt in X-Achse, Verschiebung in Y-Achse, Signale die für die Formel genommen werden (Ck,i) j Verschiebeschritt liegen senkrecht ( in Y- Richtung) Die gemessenen Signale der Einzelkanäle werden mit $(c_{kij})_j$ (bezeichnet, wobei $i = 1..N$ die Kanalnummer des Zeilendetektors, k die Anzahl der Zeilen und $j = 0..n-1$ die Vielfachen der Verschiebung a/n sind. Pro Spalte werden zur Berechnung der N mal n Werte $S_m$ Differenzen von Summen über Einzelwerte nach folgendem Algorithmus gebildet:

$$S_1 = c_{1,0}{}' = \sum_{i=1}^{N} c_{i,0} - \sum_{i=1}^{N-1} c_{i,1}$$

$$S_2 = c_{1,1}{}' = \sum_{i=1}^{N} c_{i,1} - \sum_{i=1}^{N-1} c_{i,2}$$

....

$$S_{n-1} = c_{1,n-2}{}' = \sum_{i=1}^{N} c_{i,n-2} - \sum_{i=1}^{N-1} c_{i,n-1}$$

$$S_n = c_{1,n-1}{}' = \sum_{i=1}^{N-1} c_{i,n-1} - \sum_{i=2}^{N} c_{i,0} - \sum_{m=1}^{n-2} c_{N,m}$$

....

$$S_{k \cdot n+1} = c_{k,0}{}' = \sum_{i=k}^{N} c_{i,0} - \sum_{i=k}^{N-1} c_{i,1}$$

$$S_{k \cdot n+2} = c_{k,1}{}' = \sum_{i=k}^{N} c_{i,1} - \sum_{i=k}^{N-1} c_{i,2}$$

....

$$S_{k \cdot n+j+1} = c_{k,j}{}' = \sum_{i=k}^{N} c_{i,j} - \sum_{i=k}^{N-1} c_{i,j+1}$$

....

$$S_{(k+1)n-1} = c_{k,n-2}{}' = \sum_{i=k}^{N} c_{i,n-2} - \sum_{i=k}^{N-1} c_{i,n-1}$$

$$S_{(k+1)n} = c_{k,n-1}{}' = \sum_{i=k}^{N-1} c_{i,n-1} - \sum_{i=k+1}^{N-1} c_{i,0} - \sum_{m=1}^{n-2} c_{N,m}$$

....

$$S_{N \cdot n-n} = c_{N,0}{}' = c_{N,0}$$

$$S_{N \cdot n-n+1} = c_{N,1}{}' = c_{N,1}$$

....

$$S_{N \cdot n} = c_{N,n-1}{}' = c_{N,n-1}$$

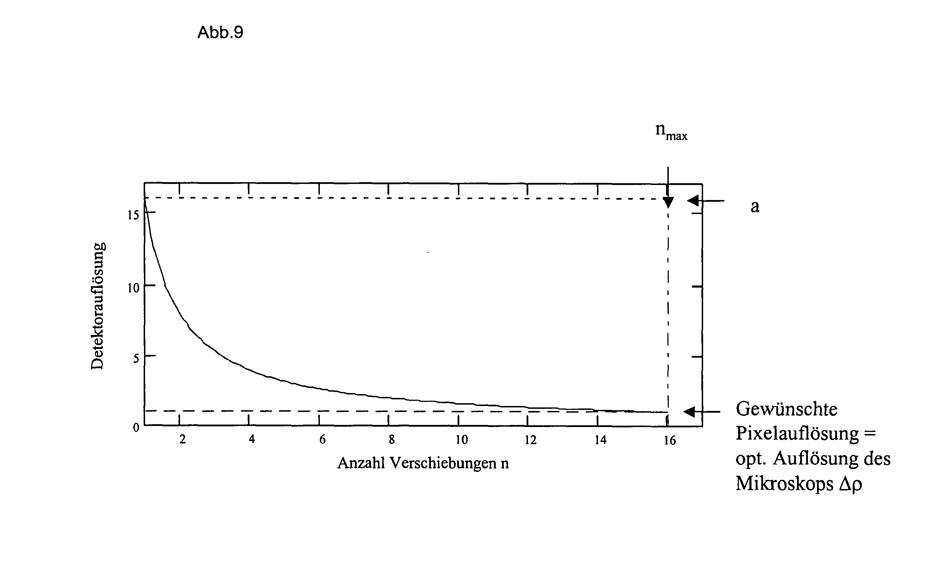

Die so berechneten Werte S (Zwischenwerte pro Spalte) können im Anschluß graphisch auf dem angezeigten Bild, z.B. während eines Scans dargestellt werden. Abb.9) zeigt die Abhängigkeit der Detektorauflösung von der Anzahl der Verschiebungen n anhand der oben beschriebenen Anordnung. Für n=1 ist die räumliche Auflösung der Detektionseinheit gleich der räumlichen Auflösung der Schrittweite (a). Für eine 5 malige Verschiebung um a/5 beträgt die räumliche Auflösung der Detektionseinheit a/5. Die maximal erreichbare räumliche Auflösung wird durch die optische Grenzauflösung des Mikroskops bestimmt. Diese maximale räumliche Auflösung (□□) wird entsprechend dem Abtasttheorem nach Nyquist genau dann erreicht, wenn die Detektorauflösung gleich der halben potentiellen Auflösung des Mikroskops (□□) ist. Dies entspricht einer Anzahl:

$$n_{\max} = 2 \cdot \frac{L}{\Delta\rho}$$

Bei der Streifenprojektion ( 7505) werden Teilbilder aufgenommen und verrechnet, durch die Verrechnung wird die hohe Auflösung erzielt, wenn nun diese Teilbilder für die Informationsgewinnung verwenden werden , wären sie mit schlechterer Ortsauflösung aber höherer Zeitauflösung nutzbar ( z.B. dreimal schneller.)

Es könnte also eine Bildinformation aus den aufgenommenen Teilbildern , wobei durch Interpolation eine Rasterung des Bildes ausgeglichen würde, erfolgen, die jeweils zusätzlich eine Information über schnelle Bewegungen im Bild enthalten würde. Das Gitter kann hierbei durch eine entsprechende Mittelung über eine Gitterperiode oder durch die Auswertung der Maximastellen unterdrückt werden Abb.2 zeigt eine weitere Ausgestaltung der Erfindung:

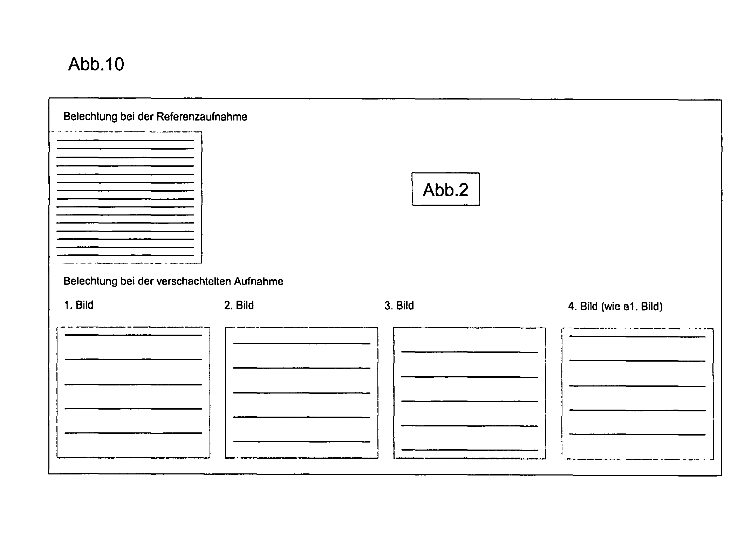

Werden zur Erhöhung der Aufnahmegeschwindigkeit von Proben mit einem konfokalen Mikroskop Zeilen oder Bilder übersprungen , kommt es bei Fluoreszezproben zu einer ungleichmäßigen Bleichung bzw. starker Bleichung einiger Regionen. Mit dem im hier beschriebenen Verfahren kann ein gleichmässiges Bleichen der Probe erreicht werden. Zur Erhöhung der Aufnahmegeschwindigkeit wird bei der Aufnahme von Bildern mit konfokalen Mikroskopen nur jede n-te Zeile beleuchtet und aufgenommen ( Fig. 10). Die Intensitätswerte für die nicht aufgenommenen Zeilen werden aus den Intensitäten benachbarter Pixel interpoliert. Bei Zeitserien und kontinuierlicher Datenaufnahme werden dabei einzelne Linien in einer Fluoreszenzprobe gebleicht, während die benachbarten Regionen nicht gebleicht werden.

Unter einer Referenzaufnahme wird hier eine Bildaufnahme bezeichnet, bei der der metrische Abstand der aufgenommenen Pixel in der Probe in beiden Bildrichtungen gleich ist. Die Bildrichtungen werden mit x-Richtung und y-Richtung bezeichnet wobei die x-Richtung bei punktweiser Beleuchtung der Probe diejenige Richtung ist, in der der Punkt bei der Abtastung der Probe schnell bewegt wird. Bei einer zeilenweisen Beleuchtung der Probe sei die x-Richtung die Richtung der Zeile. Die y-Richtung sei senkrecht zur x-Richtung angeordnet und liegt in der Bildebene.

Festgelegt wird ein ganzzahliger Verschachtelungswert n, der angibt, wieviele Zeilen bei der beschleunigten Datenaufnahme in y-Richtung übersprungen werden. Bei wiederholter Aufnahme eines Bildes wird die Probe nicht an der selben Stelle, sondern um einen Betrag in y-Richtung verschoben abgetastet. Der Betrag der Verschiebung kann für jede aufgenommen Zeile unterschiedlich sein. Das Verfahren ist aber einfacher, wenn der gleiche Betrag verwendet wird. Im einfachsten Fall wird als Betrag der Verschiebung der Wert des Zeilenabstands in y-Richtung von der Referenzaufnahme verwendet und bei der n*i-ten Bildaufnahme mit ganzzahligem i wird wieder an der selben Stelle wie beim ersten Bild beleuchtet.

Mit dem Verfahren wird ein gleichmäßiges Bleichen der Probe erreicht. Der maximale Bleicheffekt für einzelne Zeilen kann um ca. den Faktor 1/n reduziert werden.

Das Verfahren läßt sich zur Aufnahme von Bildern mit Bildebenen mit beliebiger Orientierung relativ zur Beleuchtungsrichtung verwenden. Neben Scannern und Piezoantrieben können auch andersartige Antriebe zur Realisierung der Verschiebung eingesetzt werden.

Für die Aufnahme von Bildstapeln läßt sich ein Verfahren anwenden, das auf der gleichen Idee beruht und lediglich eine Verallgemeinerung auf eine weitere Dimension darstellt.

Dabei werden die Einzelbider des Stapels bei der nächsten Aufnahme des Stapels senkrecht zur Bildebene verschoben aufgenommen. Die Verfahren der verschachtelten Aufnahme von Bilden und Stapeln können auch gleichzeitig angewendet werden.

Die Erfindung ist nicht an die zeilenweise Abtastung gebunden.Bei Nipkowscannern könnte die Auswertung eines Teiles der Lochspiralen oder Lochanordnungen bei einem ersten Schritt entfallen und dann weitere Lochanordnungen in einem weiteren Schritt herangezogen werden.

Bei Multipunktanordnungen die über die Probe bewegt werden , könnten bestimmte Punktbereiche oder Punktzeilen zunächst nicht zur Auswertung herangezogen werden.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen[1] und den eingesetzten Untersuchungsmethoden mit einer Vielzahl von Farbstoffen[2] ablesen. Siehe z.B.:

[1]B. Alberts et al. (2002): Molecular Biology of the Cell; Garland Science.

[1,2]G. Karp (2002): Cell and Molecular Biology: Concepts and Experiments; Wiley Text Books.

[1,2]R. Yuste et al. (2000): Imaging neurons - a laboratory Manual; Cold Spring Harbor Laboratory Press, New York.

[2]R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

*Entwicklung von Organismen*

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:

■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.

■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.

■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:

- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

*Transportvorgänge in Zellen*

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:

■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.

■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.

■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

*Wechselwirkungen von Molekülen*

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:

■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.

■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.

■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

*Signalübertragung zwischen Zellen*

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:

■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.

■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

**Patentansprüche**

1. Verfahren zur bildlichen Erfassung von Objekten mittels eines Lichtrastermikroskopes mit linienförmiger Abtastung wobei eine Abtastung einer Probe zur Erzeugung eines Probenbildes in Abtastschritten erfolgt und der Abstand zwischen mindestens zwei Abtastschritten variabel einstellbar ist und mindestens eine zweite Abtastung der Probe erfolgt, bei dem die Lage der Abtastschritte zur Abtastrichtung versetzt wird.

EP 1 617 254 A1

2. Verfahren zur bildlichen Erfassung von Objekten mittels eines Lichtrastermikroskopes mit linienförmiger Abtastung , wobei eine zeilenweise Abtastung einer Probe zur Erzeugung eines Probenbildes in Abtastschritten erfolgt und der Abstand zwischen mindestens zwei Abtastzeilen variabel einstellbar ist und mindestens eine zweite Abtastung der Probe erfolgt, bei dem die Lage der Abtastschritte zur Abtastrichtung versetzt wird.

3. Verfahren nach Anspruch 1 oder 2 , wobei durch Erhöhung des Abstands eine Verringerung der optischen Auflösung erfolgt.

4. Verfahren nach einem der vorangehenden Ansprüche, wobei eine Erfassung mittels eines Linienscanners, Nipkowscanners oder Multipunktscanners erfolgt.

5. Verfahren nach einem der vorangehenden Ansprüche, wobei eine Zeitserie durch mehrere Aufnahmen von Probenbildern aufgenommen wird.

6. Verfahren nach einem der vorangehenden Ansprüche, wobei mehrere Bilder der Zeitserie miteinander zur Darstellung einer Bewegung korreliert werden.

7. Verfahren nach einem der vorangehenden Ansprüche, wobei die Erhöhung des Abstands und/ oder der Versatz der Lage der Abtastschritte einstellbar ist.

8. Verfahren nach einem der vorangehenden Ansprüche, wobei über Eingabemittel für eine Bedienperson das Verhältnis von räumlicher und zeitlicher Auflösung anhand der Einstellung verändert wird.

9. Verfahren nach einem der vorangehenden Ansprüche, wobei eine farbkodierte Darstellung von Proben oder Probenbereichen anhand ihrer Bewegungsgeschwindigkeit erfolgt.

10. Verfahren zum gleichmäßigen Beleuchten, insbesondere Bleichen einer Probe mit einem Lichtrastermikroskop , insbesondere nach einem der vorangehenden Ansprüche , mit mindestens einer ersten rasterförmigen Probenbeleuchtung , wobei bei einer Erhöhung des Abstandes zwischen beleuchteten Probenpunkten zur beschleunigten Datenaufnahme mindestens eine zweite rasterförmige Probenbeleuchtung erfolgt und eine Beleuchtung von Probenpunkten erfolgt, die im Abstand der beleuchteten Probenpunkte der ersten Probenbeleuchtung liegen.

11. Verwendung von Verfahren nach mindestens einem der vorangehenden Ansprüche zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:

  • Analyse lebender Zellen in einer 3D Umgebung, deren Nachbarzellen empfindlich auf Laserbeleuchtung reagieren und die von der Beleuchtung der 3D-ROI geschützt werden müssen;
  • Analyse lebender Zellen in einer 3D Umgebung mit Markierungen, die gezielt durch Laserbeleuchtung in 3D gebleicht werden sollen, z.B. FRET-Experimente;
  • Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
  • Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
  • Gezielte Analyse lebender Zellen in einer 3D Umgebung mit Markierungen, die manipulationsbedingte Farbänderungen durch Laserbeleuchtung aufweisen, z.B. paGFP, Kaede;
  • Gezielte Analyse lebender Zellen in einer 3D Umgebung mit sehr schwachen Markierungen, die z.B. eine optimale Balance von Konfokalität gegen Detektionsempfindlichkeit erfordern.
  • Lebende Zellen in einem 3D-Gewebeverband mit variierenden Mehrfachmarkierungen, z.B. CFP, GFP, YFP, DsRed, HcRed u.ä.
  • Lebende Zellen in einem 3D-Gewebeverband mit Markierungen, die funktionsabhängige Farbänderungen aufweisen, z.B. Ca+-Marker
  • Lebende Zellen in einem 3D-Gewebeverband mit Markierungen, die entwicklungsbedingte Farbänderungen aufweisen, z.B. transgene Tiere mit GFP
  • Lebende Zellen in einem 3D-Gewebeverband mit Markierungen, die manipulationsbedingte Farbänderungen durch Laserbeleuchtung aufweisen, z.B. paGFP, Kaede

• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

12. Verwendung von Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen.

13. Verwendung von Verfahren nach mindestens einem der vorangehenden Ansprüche für die Darstellung molekularer und anderer subzellulärer
Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen.

14. Verwendung von Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem.

Fig. 1

Fig. 2

Fig. 4

Fig. 3

Scan 1)

Abb, 5a

Scanfeld

a

Scanlinie

Scan 2)

Abb.5b

Scanfeld

a/2

a

Scanlinie

Abb.6

Bild mit hoher optischer Auflösung aufgenommen
Entspricht Originalbild

Abb.7a

Bild aufgenommen mit dem erfindungsgemäßen Gegenstand

Im Vergleich zur Bildrate
sich schnell bewegende Objekte

Abb.7b

Statische Objekte
Bzw. im Vergleich zur Bildrate
sich langsam bewegende Obj.

Überlagerung der schnellen und langsamen
Objekte

Abb.8

$(C_{k,i})_{j+2}$

$(C_{k,i})_{j+1}$

$(C_{k,i})_j$

i

k

Bildkoordinaten (x-Achse)

Bildkoordinaten (y-Achse)

Abb.9

Gewünschte Pixelauflösung = opt. Auflösung des Mikroskops $\Delta\rho$

a

$n_{max}$

Detektorauflösung

Anzahl Verschiebungen n

Abb.10

Abb.2

Europäisches
Patentamt

**EUROPÄISCHER RECHERCHENBERICHT**

Nummer der Anmeldung

EP 04 02 3498

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 43 992 A1 (LEICA MICROSYSTEMS HEIDELBERG GMBH) 21. März 2002 (2002-03-21) * Absatz [0039] - Absatz [0047]; Abbildung 4 * ----- | 1-8, 10-14 | G02B21/00 |
| X | PATENT ABSTRACTS OF JAPAN Bd. 1997, Nr. 05, 30. Mai 1997 (1997-05-30) -& JP 09 005630 A (NIKON CORP), 10. Januar 1997 (1997-01-10) * Zusammenfassung; Abbildungen 1-4 * ----- | 1-5,7,10 | |
| X | US 5 936 764 A (KOBAYASHI ET AL) 10. August 1999 (1999-08-10) * Spalte 4, Zeile 65 - Spalte 8, Zeile 4; Abbildungen 1,2 * ----- | 1-8,10 | |
| X | EP 0 977 069 A (CARL ZEISS JENA GMBH) 2. Februar 2000 (2000-02-02) * Absätze [0024], [0043]; Abbildungen 1,2 * ----- | 10 | **RECHERCHIERTE SACHGEBIETE (Int.Cl.7)** G02B |

Der vorliegende Recherchenbericht wurde für alle Patentansprüche erstellt

| Recherchenort | Abschlußdatum der Recherche | Prüfer |
|---|---|---|
| Berlin | 11. März 2005 | Jacobs, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 04 02 3498

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-2005

| Im Recherchenbericht angeführtes Patentdokument | Datum der Veröffentlichung | Mitglied(er) der Patentfamilie | Datum der Veröffentlichung |
|---|---|---|---|
| DE 10043992 A1 | 21-03-2002 | US 2002027709 A1 | 07-03-2002 |
| JP 09005630 A | 10-01-1997 | KEINE | |
| US 5936764 A | 10-08-1999 | JP 3343276 B2<br>JP 6300974 A<br>EP 0620468 A1<br>US 5691839 A | 11-11-2002<br>28-10-1994<br>19-10-1994<br>25-11-1997 |
| EP 0977069 A | 02-02-2000 | DE 19829981 A1<br>EP 0977069 A2<br>JP 2000035400 A<br>US 6462345 B1 | 05-01-2000<br>02-02-2000<br>02-02-2000<br>08-10-2002 |

EPO FORM P0461

Für nähere Einzelheiten zu diesem Anhang : siehe Amtsblatt des Europäischen Patentamts, Nr.12/82